# EUROPÄISCHE PATENTSCHRIFT

(11) **EP 3 784 925 B1**
(45) Veröffentlichungstag und Bekanntmachung des Hinweises auf die Patenterteilung: **02.11.2022**
(21) Anmeldenummer: 19724745.5
(22) Anmeldetag: 25.04.2019
(51) Int. Cl.: F16H 37/02, F16H 37/06, F03D 15/00, F16H 7/02

(54) **ÜBERSETZUNGSGETRIEBE SOWIE WINDKRAFTANLAGE UND ELEKTRISCHER ANTRIEB FÜR FAHRZEUGE MIT EINEM SOLCHEN ÜBERSETZUNGSGETRIEBE**
STEP-UP GEAR MECHANISM AND WIND POWER PLANT AND ELECTRIC DRIVE FOR VEHICLES HAVING SUCH A STEP-UP GEAR MECHANISM
ENGRENAGE DE TRANSMISSION AINSI QU'INSTALLATION ÉOLIENNE ET ENTRAÎNEMENT ÉLECTRIQUE POUR DES VÉHICULES ÉQUIPÉS DUDIT ENGRENAGE DE TRANSMISSION

(30) Priorität: 25.04.2018 DE 202018102326 U
(43) Veröffentlichungstag der Anmeldung: 03.03.2021
(73) Patentinhaber: Lutz, Peter, 81925 München (DE)
(72) Erfinder: Lutz, Peter, 81925 München (DE)
(74) Vertreter: Winter, Brandl - Partnerschaft mbB
(86) Internationale Anmeldenummer: PCT/EP2019/060614
(87) Internationale Veröffentlichungsnummer: WO 2019/207044

(56) Entgegenhaltungen:
- DE-C1- 4 022 073
- DE-T2- 60 101 218
- US-A- 804 980
- US-A- 2 445 797
- US-B2- 9 033 109
- US-B2- 9 879 768

## Beschreibung

Die Erfindung betrifft ein Übersetzungsgetriebe nach Anspruch 1 sowie eine Windkraftanlage nach Anspruch 10 und einen elektrischen Antrieb für Fahrzeuge nach Anspruch 11 mit einem solchen Übersetzungsgetriebe.

In Windkraftanlagen und auch in elektrischen Antrieben für Fahrzeuge und andere Anwendungen werden häufig Planetengetriebe eingesetzt, wie z. B. die Winergy Multi Duored Gearbox der Winergy AG bzw. der Flender GmbH. Diese Getriebe werden in Windrädern benötigt, um die niedrige Rotationsgeschwindigkeit der Rotoren auf höhere Drehzahlen zum Betreiben von Generatoren zu übersetzen und in elektrischen Antrieben für Fahrzeuge, um die hohen Drehzahlen von leistungsfähigen Elektromotoren in niedrigere Drehzahlen mit hohen Drehmomenten zu übersetzen. Planetengetriebe sind Zahnradgetriebe und daher anfällig gegen Stoß- und Schlagbeanspruchung, wie sie z. B. durch Windböen bei Windrädern verursacht werden. Zusätzlich sind sie vergleichsweise schwer.

US 9 879 768 B2 offenbart ein Übersetzungsgetriebe.

Es ist daher Aufgabe der vorliegenden Erfindung ein Übersetzungsgetriebe anzugeben, das bei gleicher Leistung leichter ist als ein herkömmliches Planetengetriebe und das zudem unempfindlicher gegen Schlag- und Stoßbeanspruchungen ist. Weiter ist es Aufgabe der Erfindung eine Windkraftanlage und einen elektrischen Antrieb für Fahrzeuge mit einem solchen Übersetzungsgetriebe anzugeben.

Die Lösung dieser Aufgabe erfolgt durch die Merkmale des Anspruchs 1 bzw. 10 und 11.

Weitere vorteilhafte Ausführungsarten der Erfindung werden in den abhängigen Ansprüchen definiert.

Die Erfindung stellt ein Planetengetriebe mit Zahnrad- und Treibriemenkomponenten dar. Herkömmliche Planetengetriebe mit Zahnrädern können sicher hohe Drehmomente und Leistungen übertragen. Durch die Kombination mit Treibriemen welche Wellenräder antreiben, sind weniger Zahnräder nötig und das Gewicht sinkt. Zusätzlich wirken die Treibriemen als Dämpfungselement, das Schlag- und Stoßbeanspruchen abfedert und dämpft. Durch die Planetenzahnräder der Planeteneinheit(en) erfolgt die Übertragung auf die Planetenwellenräder und die Kopplung mittels Treibriemen auf wenigstens eine Schnellläufer-Einheit. Jede Planeten-Einheit ist mittels eines eigenen Treibriemens mit einem Schnellläuferwellenrad einer Schnellläufer-Einheit gekoppelt.

Vorzugsweise wird eine von Mehrzahl der Planeten-Einheiten eingesetzt, wodurch sich hohe Drehmomente und Leistungen übersetzen lassen.

Vorzugsweise sind diese Planeteneinheiten identisch aufgebaut, was zu Kosteneinsparungen führt.

Vorzugsweise ist der Schnellläufer-Einheit eine weitere Getriebestufe mit einer weiteren schnelllaufenden Getriebewelle nachgeschaltet.

Vorzugseise verlaufen alle Wellenachsen parallel, jedoch könnte aufgrund des Treibriemens die schnell drehende Getriebewelle auch im spitzen Winkel zu den anderen Getriebewellen angeordnet sein.

Vorzugsweise sind die Planeten-Einheiten symmetrisch um das Sonnenrad angeordnet, um die Belastungen gleichmäßig zu verteilen.

Gemäß einer bevorzugten Ausführungsform sind bei der Hälfte Planeten-Einheiten die jeweiligen Planetenwellenräder nach einer Seite versetzt zu dem Sonnenrad und bei der anderen Hälfte der Planten-Einheiten sind die jeweiligen Planetenwellenräder nach der anderen Seite versetzt zu dem Sonnenrad angeordnet. Die Zahl der Planetenzahnräder ist damit gleich der Planetenwellenräder, die größeren Planetenwellenräder sind jedoch zu beiden Seiten des Sonnenrades angeordnet, wodurch sich ein einfacherer Aufbau ergibt.

Gemäß einer bevorzugten Ausführungsform enthalten die Planeteneinheiten ein Planetenzahnrad, das mit dem Sonnenrad in Eingriff steht und zwei links und rechts neben dem Planetenzahnrad angeordnete Planetenwellenräder. Auf diese Weise werden die zu übertragenden Momente auf die doppelte Anzahl von Wellenrädern und deren Treibriemen übertragen.

Die als An- oder Abtrieb wirkenden Schnellläufereinheiten werden zwischen zwei Planeten-Einheiten über die Treibriemen abgegriffen.

Die Planetenwellenräder zu beiden Seiten des Sonnenzahnrades bzw. die zugehörigen Treibriemen können über eine oder mehrere Schnellläufer-Einheiten mit zwei Schnellläuferwellenrädern auf der gemeinsamen schnell drehenden Getriebewelle oder über eine oder mehrere Schnellläufer-Einheiten mit einem Schnellläuferwellenrädern auf zwei unabhängigen schnell drehenden Getriebewellen geführt werden. Bei zwei unabhängigen schnell drehenden Getriebewellen können zum Beispiel zwei Generatoren angetrieben werden.

Die einzelnen Getriebewellen können in einem gemeinsamen Rahmen oder Träger gelagert werden. Der Träger kann mehrere Elemente umfassen zwischen denen die Getriebewellen gelagert sind und ein einzelnes Element in der die Getriebewellen gelagert sind.

Das Übersetzungsgetriebe wird vorzugsweise mit einer Kühleinrichtung und die Zahnradkomponenten mit einer aktiven Schmiereinrichtung ausgestattet.

Über eine Spannvorrichtung mit Rollen werden der oder die Treibriemen auf der notwendigen Spannung gehalten um die auftretenden Drehmomente sicher zu übertragen.

Die Treibriemen sind vorzugsweise Zahnriemen und die Kraftübertragung zwischen den Wellenräder ohne Schlupf zu gewährleisten. Auch Treibriemen mit Noppen und komplementären Ausnehmungen in den Wellenrädern oder Wellenräder mit Noppen oder Zähnen, die in komplementäre Ausnehmungen im Treibriemen eingreifen, sind geeignet. Bei Verwendung von Glattriemen müssten diese mit sehr hohen Vorspannkräften montiert werden, um Schlupf zu verhindern. Diese hohen Vorspannkräfte verringern die Standzeit von Glattriemen.

Als Treibriemen eignen sich besonders Treibriemen aus hochfesten faserverstärktem Kunststoff oder Titan. Geeignete Kunststoffe sind insbesondere Polyamid, mit Carbonfasern verstärkte Kunststoffe und Aramide (z. B, Kevlar). Auch die Planetenwellenräder und/oder die Zahnradkomponenten können aus diesen Materialien hergestellt sein. Bei geringeren Leistungen, z. B. beim Einsatz als Getriebe in E-Bikes können die Zahnräder und/oder die Wellenräder auch aus nicht-faserverstärktem Kunststoff bestehen.

Das erfindungsgemäße Übersetzungsgetriebe kann vorteilhaft als Getriebe zwischen Rotor und Generator bei Windrädern eingesetzt werden. Hierbei ist die langsam drehende Rotorwelle mit der langsam drehenden Getriebewelle des Übersetzungsgetriebes gekoppelt.

Das Übersetzungsgetriebe kann mit mehreren Generatoren gekoppelt sein. Hierbei ist es vorteilhaft möglich wahlweise einen oder mehrere Generatoren mit dem Übersetzungsgetriebe zu koppeln. Auf diese Weise kann einem Teillastbereich Rechnung getragen werden. Bei starkem Wind werden z.B. zwei Generatoren mit dem Übersetzungsgetriebe gekoppelt und bei schwachem Wind bleibt nur ein Generator mit dem Übersetzungsgetriebe gekoppelt und der zweite Generator wird entkoppelt und dadurch geschont.

In einer anderen Ausgestaltung ist das erfindungsgemäße Übersetzungsgetriebe mit einem Elektromotor gekoppelt. Hierbei stellt die schnell drehende Getriebewelle den Antrieb und die langsam drehende Getriebewelle den Abtrieb des Übersetzungsgetriebes dar.

Es ergeben sich für das Übersetzungsgetriebe gemäß vorliegender Erfindung nachfolgende Vorteile im Vgl. zu herkömmlichen Getrieben:
1. Die Riemen sorgen für deutlich mehr Laufruhe und sind sehr einfach zu tauschen.
2. Das Getriebe hat weniger komplexe bewegte Teile. Eine Schmierung entfällt teilweise.
3. Das Getriebe ist deutliche leichter als vergleichbare herkömmliche Getriebe.
4. Die Gewichtseinsparung wirkt sich positiv bei Montage und Betrieb, bzw. der Wartung des Getriebes aus.
5. Die Zahnriemen können vorbeugend im Rahmen der regulären Wartung mit relativ wenig Aufwand getauscht werden.
6. Die Leistung kann über mehrere weitgehend voneinander entkoppelten Zahnrädern vom Sonnenrad auf die jeweilige Wellenräder übertragen werden.

Weitere Einzelheiten, Merkmale und Vorteile der Erfindung ergeben sich aus der nachfolgenden Beschreibung einer beispielhaften Ausführungsform.

### Es zeigt

- Fig. 1: eine perspektivische Darstellung einer ersten Ausführungsform von einer Seite des Sonnenrades betrachtet;
- Fig. 2: eine perspektivische Darstellung der ersten Ausführungsform von der anderen Seite des Sonnenrades betrachtet auf der die Generatoren angeordnet sind;
- Fig. 3: eine Ansicht der ersten Ausführungsform von der Seite der Generatoren her betrachtet;
- Fig. 4: eine Fig. 3 entsprechende Darstellung der ersten Ausführungsform mit beispielhafter Bemaßung in mm;
- Fig. 5: eine Seitenansicht in Richtung des Pfeils A in Fig. 3 mit Bemaßung in mm;
- Fig. 6: eine perspektivische Darstellung eines Windrades mit dem Übersetzungsgetriebe nach Fig. 1 bis 6und zwei Generatoren;
- Fig. 7: eine perspektivische Darstellung einer zweiten Ausführungsform mit zwei Planeten-Einheiten, einer Schnellläufer-Einheit und einem Generator; und
- Fig. 8: eine perspektivische Darstellung einer dritten Ausführungsform mit einer Planeten-Einheit, einer Schnellläufer-einheit und einem Generator.

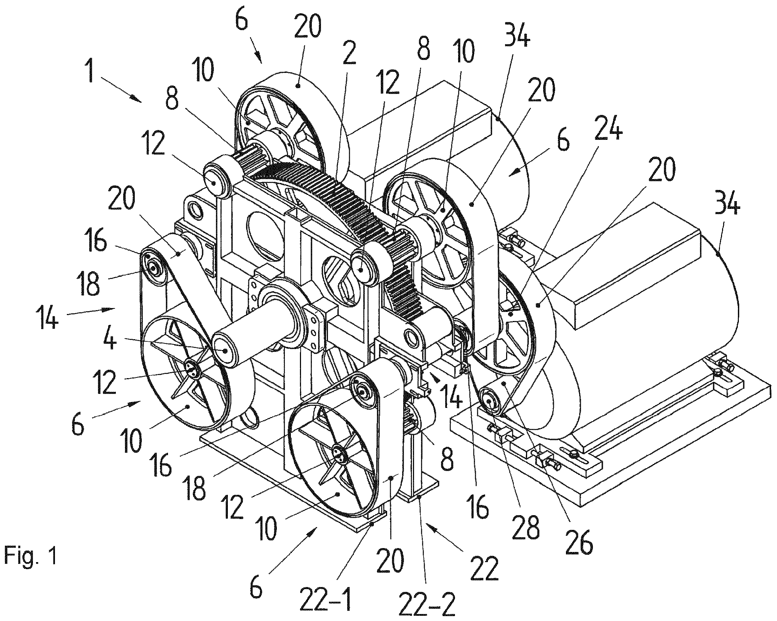

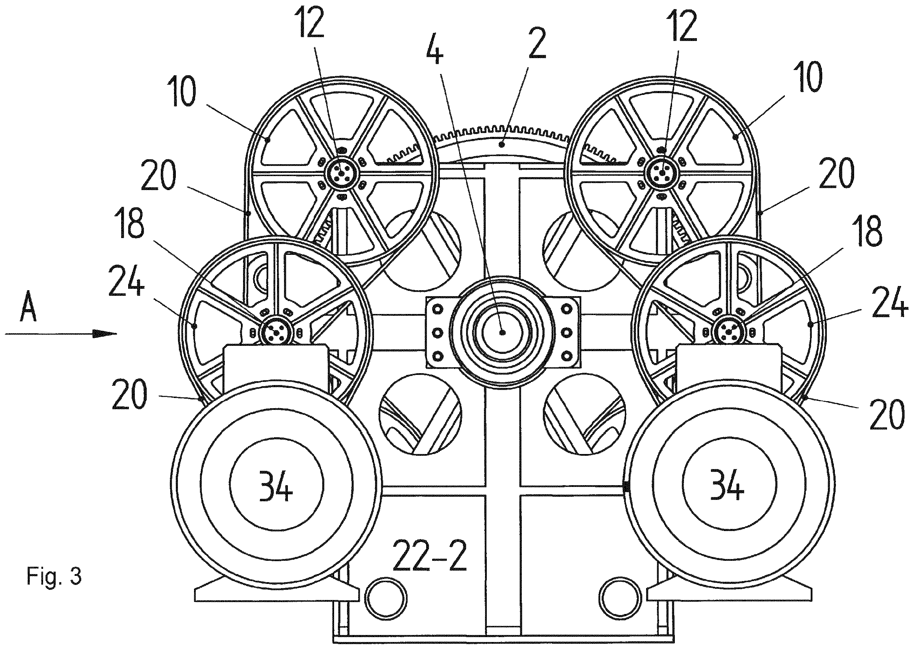

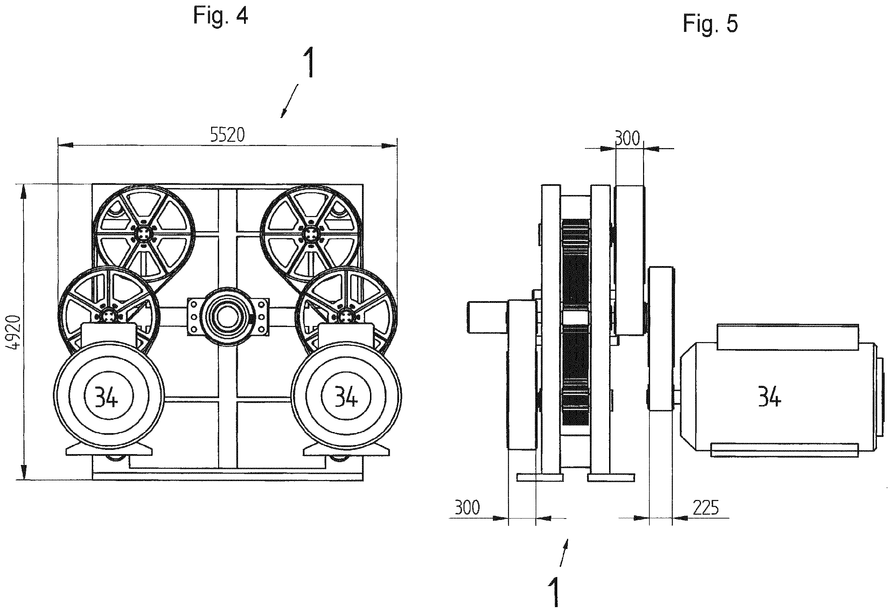

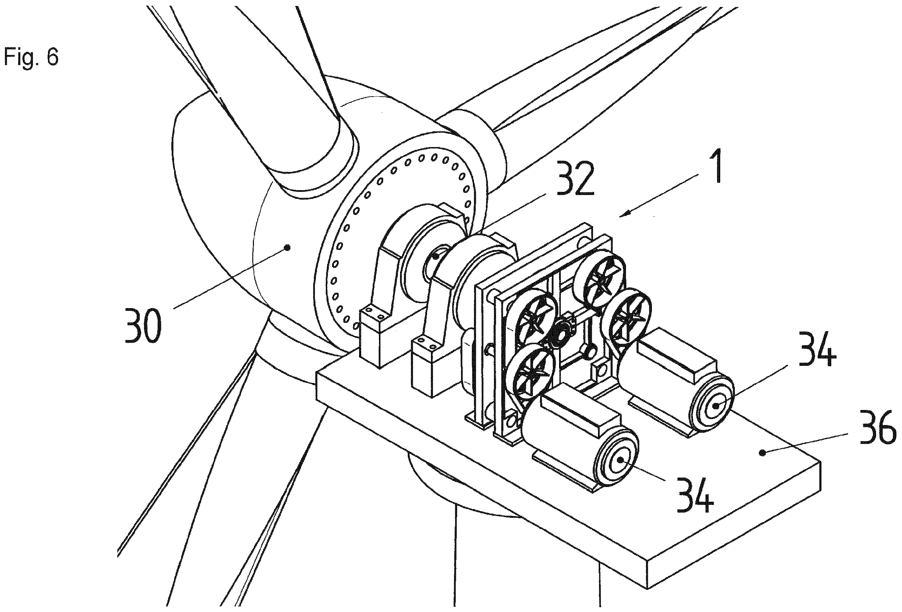

Die Figuren 1 bis 6 zeigen eine erste Ausführungsform eines Übersetzungsgetriebes 1 mit einem Sonnenrad bzw. Sonnenzahnrad 1, vier Planten-Einheiten 6 und zwei Schnellläufer-Einheiten 14, die jeweils über eine dritte Getriebestufe zwei Generatoren 34 antreiben. Das Sonnenrad 2 ist zwischen einer ersten und einer zweiten Halteplatte 22-1, 22-2 auf einer langsam drehenden Getriebewelle 4 angeordnet, die in den beiden Halteplatten 22-1, 22-2 gelagert ist. Die beiden Halteplatten 22-1, und 22-2 bilden einen gemeinsamen Rahmen oder Träger 22. Die vier Planeten-Einheiten 6 umfassen jeweils ein Planetenzahnrad 8 und ein Planetenwellenrad 10, die auf einer gemeinsamen Planetenwelle 12 in den Halteplatten 22-1, 22-2 gelagert sind. Die kleineren Planetenzahnräder 8 kämmen mit dem Sonnenrad 2 und drehen die größeren Planetenwellenräder, die damit eine erste Getriebestufe bilden. Zwei Planeten-Einheiten 6 sind in der ersten Halteplatte 22-1 gelagert und zwei Planeten-Einheiten 6 sind in der zweiten Halteplatte 22-2 gelagert. Jeweils eine in der ersten und zweiten Halteplatte 22-1, 22-2 gelagerte Planten-Einheit 6 ist über einen Treibriemen 20 mit einer der beiden Schnellläufer-Einheiten 14 gekoppelt. Die Schnellläufer-Einheiten 14 umfassen jeweils eine schnell drehende Getriebewelle 18, die in der ersten und zweiten Halteplatte 22-1, 22-2 gelagert sind. Jede Schnellläufer-einheit 14 umfasst zwei Schnellläuferwellenräder 16, die auf den Außenseiten der beiden Halteplatten 22-1 und 22-2 im Endbereich der jeweiligen schnell drehenden Getriebewelle 18 angeordnet sind. Die Treibriemen 20 koppeln die vier Planetenwellenräder 10 mit den vier Schnellläuferwellenrädern 16. Der Durchmesser der Planetenwellenräder 10 ist größer als der Durchmesser der Schnellläuferwellenräder 16, wodurch eine zweite Getriebestufe gebildet ist. Auf den Generatoren 24 zugewandten Enden der beiden schnell drehenden Getriebewellen 18 ist jeweils ein erstes Wellenrad 24 der dritten Getriebestufe angeordnet, das über einen Treibriemen 20 mit einem zweiten Wellenrad 26 der dritten Getriebestufen gekoppelt ist. Das zweite Wellenrad 26 weist einen kleineren Durchmesser als das erste Wellenrad 24 auf. Das zweite Wellenrad 26 der dritten Getriebestufe ist auf einer weiteren schnelllaufenden Getriebewelle 28 angeordnet, die die Generatorwelle bildet und die beiden Generatoren 34 antreibt.

Alternativ (nicht dargestellt) ist es auch möglich, dass die beiden zweiten Wellenräder 26 der dritten Getriebestufe auf einer gemeinsamen weiteren schnell drehenden Getriebewelle 28 angeordnet sind, die Generatorwelle eines einzigen Generators 34 bildet.

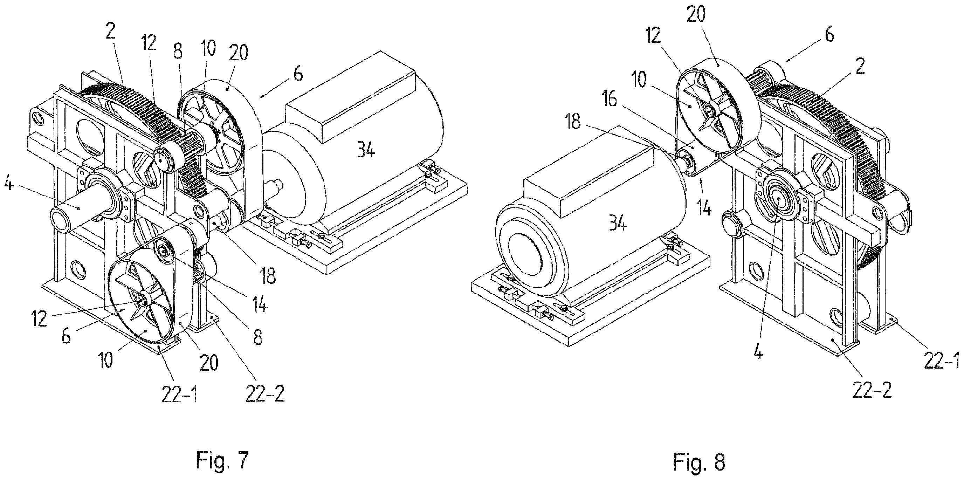

Fig. 7 zeigt schematisch die Nutzung des Übersetzungsgetriebes 1 in einer Windkraftanlage mit einem Rotor 30, der auf einer Rotorwelle 32 auf einer gemeinsamen Plattform 36 angeordnet ist. Die Rotorwelle 32 bildet die langsam drehende Getriebewelle 4 des Übersetzungsgetriebes 1.

Mit dem in den Figuren 1 bis 7 dargestellten Übersetzungsgetriebe sind folgende Übersetzungen möglich:

| | |
|---|---|
| Sonnenrad / Planetenzahnräder | 1:10 |
| Planetenwellenrad / Schnellläuferwellenrad | 1 : 3,571 |
| Dritte Getriebestufe | 1 : 3,571 |

Bei einer Rotordrehzahl einer Windkraftanlage von 12 Umdrehungen pro Minute ergibt sich eine Gesamtdrehzahl am Generator von 1530,42 Umdrehungen pro Minute. D. h. es können vergleichsweise kleine und damit leichte Generatoren eingesetzt werden.

Fig. 7 zeigt eine Fig. 1 entsprechende Darstellung einer zweite Ausführungsform der Erfindung, die sich von der ersten Ausführungsform nach den Figuren 1 bis 7 dadurch unterscheidet, dass das Übersetzungsgetriebe lediglich zwei Planeten-Einheiten 6, eine Schnellläufer-Einheit 14 und einen Generator 34 aufweist und keine dritte Getriebestufe vorgesehen ist. Die schnell drehende Getriebewelle 18 bildet die Generatorwelle des einzigen Generators 34.

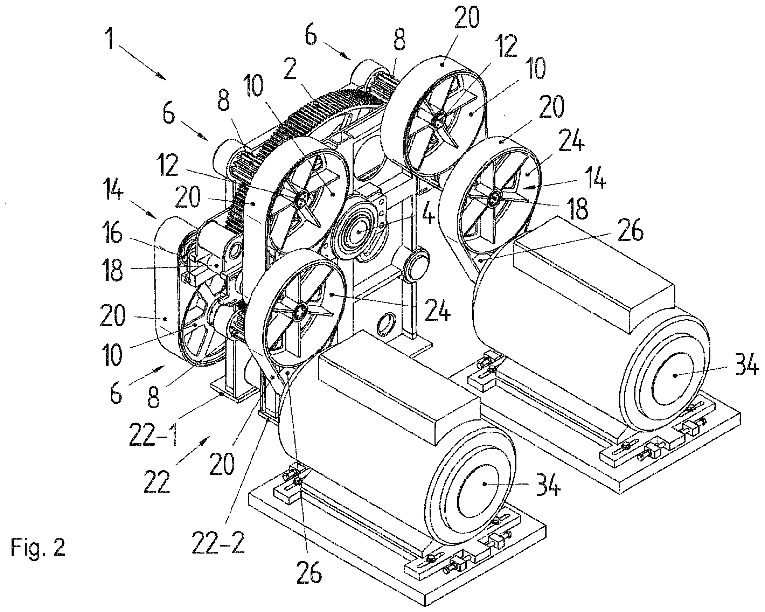

Fig. 8 zeigt eine Fig. 2 entsprechende Darstellung einer dritten Ausführungsform der Erfindung, die sich von der ersten Ausführungsform nach den Figuren 1 bis 7 dadurch unterscheidet, dass das Übersetzungsgetriebe lediglich eine Planeten-Einheit 6, eine Schnellläufer-Einheit 14 und einen Generator 34 aufweist und keine dritte Getriebestufe vorgesehen ist. Die schnell drehende Getriebewelle 18 bildet die Generatorwelle des einzigen Generators 34.

Die zweite und dritte Ausführungsform sind für geringere Leistungen geeignet und einfacher im Aufbau.

### Bezugszeichenliste:

- 1: Übersetzungsgetriebe
- 2: Sonnenrad
- 4: langsam drehende Getriebewelle
- 6: Planeten-Einheiten
- 8: Planetenzahnrad
- 10: Planetenwellenrad
- 12: Planetenwelle
- 14: Schnellläufer-Einheit
- 16: Schnellläuferwellenrad
- 18: schnell drehende Getriebewelle
- 20: Treibriemen
- 22: gemeinsamer Rahmen oder Träger
- 22-1: erste Halteplatte
- 22-2: zweite Halteplatte
- 24: erstes Wellenrad dritte Getriebestufe
- 26: zweites Wellenrad dritte Getriebestufe
- 28: weitere schnelllaufende Getriebewelle

- 30: Rotor
- 32: Rotorwelle
- 34: Generator
- 36: gemeinsame Plattform

## Patentansprüche

1. Übersetzungsgetriebe (1), mit
einem Sonnenzahnrad (2), das auf einer langsam drehenden Getriebewelle (4) montiert ist,
einer Mehrzahl von Planeten-Einheiten (6), die jeweils ein Planetenzahnrad (8) und wenigstens ein Planetenwellenrad (10) umfassen, die nebeneinander auf einer Planetenwelle (12) montiert sind,
wobei der Durchmesser der Planetenwellenräder (10) größer als der Durchmesser der Planetenzahnräder (8) ist,
wobei die Planetenzahnräder (8) mit dem Sonnenzahnrad (2) in Eingriff stehen, und
wobei der Durchmesser des Sonnenzahnrads (2) größer ist als der Durchmesser der Planetenwellenräder (10),
wenigstens einer Schnellläufer-Einheit (14) mit einer schnell drehenden Getriebewelle (18) auf der wenigstens zwei Schnellläuferwellenräder (16) montiert sind, wobei der Durchmesser der Schnellläuferwellenräder (16) kleiner ist als der Durchmesser der Planetenwellenräder (10), und
einer Mehrzahl von Treibriemen (20), die jeweils mit einem Planetenwellenrad (10) und einem Schnellläuferwellenrad (16) in Eingriff stehen,
wobei die langsam drehende Getriebewelle (4) und die Planetenwellen (12) parallel und mit Abstand zueinander angeordnet sind, **dadurch gekennzeichnet, dass** auf der schnell drehenden Getriebewelle (18) der wenigstens einen Schnellläufer-Einheit (14) im Abstand zueinander zwei Schnellläuferwellenräder (16) montiert sind, die jeweils mit den Treibriemen (20) unterschiedlicher Planeten-Einheiten (6) in Eingriff stehen.

2. Übersetzungsgetriebe nach Anspruch 1, **dadurch gekennzeichnet, dass** auf der schnell drehenden Getriebewelle (18) der wenigstens einen Schnellläufer-Einheit (14) ein erstes Wellenrad (24) einer dritten Getriebestufe montiert ist, dass ein zweites Wellenrad (26) der dritten Getriebestufe auf einer weiteren schnell drehenden Getriebewelle (28) montiert ist und dass ein weiterer Treibriemen (20) das erste und zweite Wellenrad (24, 26) der dritten Getriebestufe umschlingt und mit den beiden Wellenrädern (24, 26) in Eingriff steht.

3. Übersetzungsgetriebe (1) nach einem der vorhergehenden Ansprüche, **dadurch gekennzeichnet, dass** bei einem Teil der Planeten-Einheiten (6) sich das jeweilige Planetenwellenrad (10) auf einer Seite des Sonnenzahnrades (2) und bei dem anderen Teil der Planeten-Einheiten (6) sich das jeweilige Planetenwellenrad (10) auf der anderen Seite des Sonnenzahnrades (2) angeordnet ist.

4. Übersetzungsgetriebe (1) nach Anspruch 3, **dadurch gekennzeichnet, dass** bei unmittelbar benachbarten Planeten-Einheiten (6) das zugehörige Planetenwellenrad (10) auf unterschiedlichen Seiten des Sonnenzahnrads (2) angeordnet ist.

5. Übersetzungsgetriebe (1) nach Anspruch 3 oder 4, **dadurch gekennzeichnet, dass** die Hälfte der Planetenwellenräder (10) auf einer Seite und die andere Hälfte der Planetenwellenräder auf der anderen Seite des Sonnenzahnrades (2) angeordnet sind.

6. Übersetzungsgetriebe (1) nach einem der vorhergehenden Ansprüche, **dadurch gekennzeichnet,**
**dass** die Planeten-Einheiten (6) jeweils ein erstes und ein zweites Planetenwellenrad (10) umfassen, die auf der Planetenwelle (12) montiert sind,
**dass** das Planetenzahnrad (8) zwischen den beiden Planetenwellenrädern montiert ist.

7. Übersetzungsgetriebe (1) nach einem der vorhergehenden Ansprüche, **dadurch gekennzeichnet, dass** zwei Schnellläufer-Einheiten (14) vorgesehen sind.

8. Übersetzungsgetriebe (1) nach einem der vorhergehenden Ansprüche, **dadurch gekennzeichnet, dass** die wenigstens eine schnell drehende Getriebewelle (18), die Planetenwellen (12) und die langsam drehende Getriebewelle (4) in einem gemeinsamen Rahmen oder Träger (22) gelagert sind.

9. Übersetzungsgetriebe nach einem der vorhergehenden Ansprüche, **dadurch gekennzeichnet, dass** alle Treibriemen (20) gleich lang sind.

10. Windkraftanlage zur Erzeugung elektrischer Energie, mit einem Turm an dessen oberem Ende eine Plattform (36) drehbar angeordnet ist, einem auf der Plattform (36) montierten Rotor (30) mit einer Rotorwelle (32), und wenigstens einem Generator (34), der auf der Plattform (36) montiert ist, und einem Getriebe, das die Rotorwelle (32) mechanisch mit dem Generator (34) koppelt, **dadurch gekennzeichnet,**
**dass** das Getriebe ein Übersetzungsgetriebe (1) nach einem der vorhergehenden Ansprüche ist, und dass die Rotorwelle (32) mechanisch mit der langsam drehenden Getriebewelle (4) und die schnell drehende Getriebewelle (18, 28) mechanisch mit dem Generator (34) gekoppelt ist.

11. Elektrischer Antrieb für Fahrzeuge, mit einem Elektromotor mit einer Antriebswelle und einem Übersetzungsgetriebe (1) nach einem der vorhergehenden Ansprüche 1 bis 9, wobei die Antriebswelle
des Elektromotors mit der schnell drehenden Getriebewelle (18, 28) des Übersetzungsgetriebes (1) gekoppelt ist.

12. Windkraftanlage nach Anspruch 10, **dadurch gekennzeichnet, dass** eine Mehrzahl von Generatoren (34) mit dem Übersetzungsgetriebe koppelbar ist.

## Claims

1. A transmission gearing (1) comprising
a sun gear (2) mounted on a slowly rotating gear shaft (4),
a plurality of planetary units (6) each comprising a planetary toothed gear wheel (8) and at least one planetary shaft gear wheel (10) which are mounted side by side on a planetary shaft (12),
wherein the diameter of the planetary shaft gear wheels (10) is larger than the diameter of the planetary toothed gear wheels (8),
wherein the planetary toothed gear wheels (8) are in engagement with the sun gear (2), and
wherein the diameter of the sun gear (2) is larger than the diameter of the planetary shaft gear wheels (10),
at least one high speed unit (14) comprising a quickly rotating gear shaft (18) on which at least two high speed shaft gear wheels (16) are mounted,
wherein the diameter of the high speed shaft gear wheels (16) is smaller than the diameter of the planetary shaft gear wheels (10), and
a plurality of driving belts (20), each of them being in engagement with a planetary shaft gear wheel (10) and a high speed shaft gear wheel (16), wherein the slowly rotating gear shaft (4) and the planetary shafts (12) are arranged in parallel to and spaced apart from each other, **characterized in that** on the quickly rotating gear shaft (18) of the at least one high speed unit (14), two high speed shaft gearwheels (16) are mounted at a distance from each other, each of them being in engagement with the driving belts (20) of different planetary units (6).

2. The transmission gearing according to claim 1, **characterized in that** on the quickly rotating gear shaft (18) of the at least one high speed unit (14), a first shaft gear (24) of a third gear stage is mounted, a second shaft gear (26) of the third gear stage is mounted on a further quickly rotating gear shaft (28), and a further driving belt (20) twines around the first and second shaft gears (24, 26) of the third gear stage and is in engagement with both shaft gears (24, 26).

3. The transmission gearing (1) according to any of the preceding claims, **characterized in that**, with one part of the planetary units (6), the respective planetary shaft gear wheel (10) is arranged on one side of the sun gear (2) and, with the other part of the planetary units (6), the respective planetary shaft gear wheel (10) is arranged on the other side of the sun gear (2).

4. The transmission gearing (1) according to claim 3, **characterized in that**, with directly adjacent planetary units (6), the associated planetary shaft gear wheel (10) is arranged on different sides of the sun gear (2).

5. The transmission gearing (1) according to claim 3 or 4, **characterized in that** half of the planetary shaft gear wheels (10) is arranged on one side, and the other half of the planetary shaft gear wheels is arranged on the other side of the sun gear (2).

6. The transmission gearing (1) according to any of the preceding claims,
**characterized in that**
the planetary units (6) each comprise a first and second planetary shaft gear wheel (10) which are mounted on the planetary shaft (12), and
that the planetary toothed gear wheel (8) is mounted between the two planetary shaft gear wheels.

7. The transmission gearing (1) according to any of the preceding claims, **characterized in that** two high speed units (14) are provided.

8. The transmission gearing (1) according to any of the preceding claims, **characterized in that** the at least one quickly rotating gear shaft (18), the planetary shafts (12), and the slowly rotating gear shaft (4) are mounted in a common frame or carrier (22).

9. The transmission gearing according to any of the preceding claims,
**characterized in that** all driving belts (20) are of equal length.

10. A wind power plant for generating electric energy, comprising
a tower having a platform (36) arranged to be rotatable at the upper end thereof,
a rotor (30) with a rotor shaft (32) mounted on the platform (36),
and at least one generator (34) mounted on the platform (36), and
a gearing mechanically coupling the rotor shaft (32) to the generator (34), **characterized in**
**that** the gearing is a transmission gearing (1) according to any of the preceding claims, and that the rotor shaft (32) is mechanically coupled to the slowly rotating gear shaft (4) and the quickly rotating gear shaft (18, 28) is mechanically coupled to the generator (34).

11. An electric drive for vehicles, comprising
an electric motor with a drive shaft and a transmission gearing (1) according to any of the preceding claims 1 to 9, wherein the drive shaft of the electric motor is coupled to the quickly rotating gear shaft (18, 28) of the transmission gearing (1).

12. The wind power plant according to claim 10, **characterized in that** a plurality of generators (34) is adapted to be coupled to the transmission gearing.

## Revendications

1. Engrenage de transmission (1), avec
une roue dentée solaire (2) qui est montée sur un arbre d'engrenage (4) tournant lentement,
une pluralité d'unités planétaires (6) qui comportent respectivement une roue dentée planétaire (8) et au moins une roue d'arbre planétaire (10) qui sont montées l'une à côté de l'autre sur un arbre planétaire (12),
dans lequel le diamètre des roues d'arbre planétaire (10) est supérieur au diamètre des roues dentées planétaires (8),
dans lequel les roues dentées planétaires (8) sont en prise avec la roue dentée solaire (2), et
dans lequel le diamètre de la roue dentée solaire (2) est supérieur au diamètre des roues d'arbre planétaire (10),
au moins une unité de rotor rapide (14) avec un arbre d'engrenage (18) tournant rapidement est montée sur l'au moins deux roues d'arbre de rotor rapide (16), dans lequel le diamètre des roues d'arbre de rotor rapide (16) est inférieur au diamètre des roues d'arbre planétaire (10), et
une pluralité de courroies d'entraînement (20) qui sont en prise respectivement avec une roue d'arbre planétaire (10) et une roue d'arbre de rotor rapide (16), dans lequel l'arbre d'engrenage (4) tournant lentement et les arbres planétaires (12) sont agencés parallèlement et à distance l'un de l'autre, **caractérisé en ce que** deux roues d'arbre de rotor rapide (16) sont montées sur l'arbre d'engrenage (18) tournant rapidement d'au moins une unité de rotor rapide (14) à distance l'une de l'autre qui sont en prise respectivement avec les courroies d'entraînement (20) de différentes unités planétaires (6).

2. Engrenage de transmission selon la revendication 1, **caractérisé en ce**
**qu'**une première roue d'arbre (24) d'un troisième étage d'engrenage est montée sur l'arbre d'engrenage (18) tournant rapidement d'au moins une unité de rotor rapide (14), qu'une seconde roue d'arbre (26) du troisième étage d'engrenage est montée sur un autre arbre d'engrenage (28) tournant rapidement et qu'une autre courroie d'entraînement (20) enroule la première et seconde roue d'arbre (24, 26) du troisième étage d'engrenage et sont en prise avec les deux roues d'arbre (24, 26).

3. Engrenage de transmission (1) selon l'une quelconque des revendications précédentes, **caractérisé en ce que** pour une partie des unités planétaires (6), la roue d'arbre planétaire (10) respective est agencée sur un côté de la roue dentée solaire (2) et pour l'autre partie des unités planétaires (6), la roue d'arbre planétaire (10) respective est agencée sur l'autre côté de la roue dentée solaire (2).

4. Engrenage de transmission (1) selon la revendication 3, **caractérisé en ce que** pour des unités planétaires (6) directement contiguës, la roue d'arbre planétaire (10) afférente est agencée sur différents côtés de la roue dentée solaire (2).

5. Engrenage de transmission (1) selon la revendication 3 ou 4, **caractérisé en ce que** la moitié des roues d'arbre planétaire (10) est agencée sur un côté et l'autre moitié des roues d'arbre planétaire est agencée sur l'autre côté de la roue dentée solaire (2).

6. Engrenage de transmission (1) selon l'une quelconque des revendications précédentes, **caractérisé en ce**
**que** les unités planétaires (6) comportent respectivement une première et une seconde roue d'arbre planétaire (10) qui sont montées sur l'arbre planétaire (12),
**que** la roue dentée planétaire (8) est montée entre les deux roues d'arbre planétaire.

7. Engrenage de transmission (1) selon l'une quelconque des revendications précédentes, **caractérisé en ce que** deux unités de rotor rapide (14) sont prévues.

8. Engrenage de transmission (1) selon l'une quelconque des revendications précédentes, **caractérisé en ce que** l'au moins un arbre d'engrenage (18) tournant rapidement, les arbres planétaires (12) et l'arbre d'engrenage (4) tournant lentement sont logés dans un cadre ou support (22) commun.

9. Engrenage de transmission selon l'une quelconque des revendications précédentes, **caractérisé en ce que** toutes les courroies d'entraînement (20) sont de même longueur.

10. Éolienne pour la génération d'énergie électrique, avec une tour, au niveau de l'extrémité supérieure de laquelle une plateforme (36) est agencée de manière rotative, un rotor (30) monté sur la plateforme (36) avec un arbre de rotor (32), et au moins un générateur (34) qui est monté sur la plateforme (36), et un engrenage qui couple l'arbre de rotor (32) mécaniquement au générateur (34), **caractérisée en ce**
**que** l'engrenage est un engrenage de transmission (1) selon l'une quelconque des revendications précédentes, et que l'arbre de rotor (32) est couplé mécaniquement à l'arbre d'engrenage (4) tournant lentement et l'arbre d'engrenage (18, 28) tournant rapidement est couplé mécaniquement au générateur (34).

11. Entraînement électrique pour des véhicules, avec un moteur électrique avec un arbre d'entraînement et un engrenage de transmission (1) selon l'une quelconque des revendications précédentes 1 à 9, dans lequel l'arbre d'entraînement du moteur électrique est couplé à l'arbre d'engrenage (18, 28) tournant rapidement de l'engrenage de transmission (1).

12. Éolienne selon la revendication 10, **caractérisée en ce qu'**une pluralité de générateurs (34) peut être couplée à l'engrenage de transmission.
